# EUROPÄISCHE PATENTANMELDUNG

(11) **EP 3 719 975 A1**
(43) Veröffentlichungstag der Anmeldung: **07.10.2020**
(21) Anmeldenummer: 19167289.8
(22) Anmeldetag: 04.04.2019
(51) Int. Cl.: H02K 9/22, H02K 11/33, H02K 3/12, H02K 3/28

(54) **ELEKTRISCHE MASCHINE**

(71) Anmelder: Siemens Aktiengesellschaft, 80333 München (DE)
(72) Erfinder: Brütting, Frank, 91054 Erlangen (DE)

(57) **Zusammenfassung**

Die Erfindung betrifft eine elektrische Maschine mit einem Stator, wobei der Stator eine Vielzahl von Nuten zur Aufnahme einer Statorwicklung umfasst. Je ein Leiterabschnitt der Statorwicklung ist je Nut eingelegt. Die Leiterabschnitte mindestens eines Polpaars sind auf einer ersten Seite des Stators miteinander kurzgeschlossen. Die Leiterabschnitte sind auf einer der ersten Seite gegenüberliegenden zweiten Seite des Stators jeweils mit einem Anschluss einer Stromversorgungseinheit verbunden. Die Stromversorgungseinheit umfasst zumindest zwei Leiter (17, 18), die elektrisch mit zumindest einem leistungselektronischen Bauteil (1) verbunden sind. Das zumindest eine leistungselektronische Bauteil (1) ist auf einem im Wesentlichen scheibenförmigen Kühlkörper (10) angeordnet, der die zweite Seite des Stators großflächig überdeckt.

## Beschreibung

Die vorliegende Erfindung betrifft eine elektrische Maschine mit einem Stator.

Der Stator weist elektrische Wicklungen auf, welche an ein Stromsystem angeschlossen werden, das häufig mehrphasig ist. Für Anwendungen mit mehr als zwei Spulen pro Pol pro Phase werden meist verteilte Wicklungen eingesetzt. Der Hauptvorteil der verteilten Wicklungen liegt darin, dass die magnetomotorische Kraft im Luftspalt zwischen Stator und einem beweglich zum Stator gelagerten Rotor der Maschine weniger Oberwellenanteil aufweist, d.h. einen geringeren Anteil unerwünschter Harmonischer der magnetomotorischen Kraft. Dadurch ergibt sich eine hohe Leistungsfähigkeit der motorisch oder generatorisch betreibbaren Maschine mit geringen Rotorverlusten, geringen Geräuschen und wenig Vibrationsproblemen. Ein Nachteil der verteilten Wicklung ist jedoch die aufwändige Fertigung.

Um eine elektrische Maschine mit guten elektrischen Eigenschaften einer verteilten Wicklung mit dem Vorteil eines geringen Fertigungsaufwands zu verbinden, schlägt die DE 10 2014 113 489 A1 vor, bei einer Maschine mit einem eine Vielzahl von Nuten umfassenden Stator, die zwischen benachbarten Zähnen des Stators gebildet sind und zur Aufnahme einer Statorwicklung dienen, in jede Nut je einen Leiterabschnitt der Statorwicklung einzulegen. Die Leiterabschnitte mindestens eines Polpaares sind dabei auf einer ersten Seite des Stators miteinander kurz geschlossen. Auf einer der ersten Seite gegenüberliegenden zweiten Seite des Stators sind die freien Enden der Leiterabschnitte mit einem Anschluss einer Stromversorgungseinheit verbunden. Die Stromversorgungseinheit umfasst zwei elektrische Leiter. Um die Verlustwärme der Halbleiterschalter und weiterer Bauteile des leistungselektronischen Bauteils abführen zu können, ist eine aktive Kühlung vorgesehen, indem ein ringförmiger Kühlkanal zum Führen eines Fluids vorgesehen ist, auf dem die leistungselektronischen Bauteile angeordnet werden. Dabei ist vorgesehen, den Kühlkanal in oder zwischen den beiden ringförmig angeordneten Leitern vorzusehen. Hierdurch ergibt sich eine aufwändige Fertigung.

Es ist Aufgabe der Erfindung, eine elektrische Maschine mit guten elektrischen Eigenschaften einer verteilten Wicklung und einer guten Kühlung mit dem Vorteil eines geringen Fertigungsaufwands zu verbessern.

Diese Aufgabe wird durch eine elektrische Maschine gemäß den Merkmalen des Anspruchs 1 gelöst. Vorteilhafte Ausgestaltungen und Weiterbildungen sind in den abhängigen Ansprüchen angegeben.

In einer Ausführungsform ist eine elektrische Maschine mit einem Stator vorgesehen. Der Stator umfasst eine Vielzahl von Nuten, die zwischen benachbarten Zähnen des Stators gebildet sind. Die Nuten dienen zur Aufnahme einer Statorwicklung. In jede Nut ist je ein Leiterabschnitt der Statorwicklung eingelegt. Die Leiterabschnitte mindestens eines Polpaares sind auf einer ersten Seite des Stators miteinander kurz geschlossen. Auf einer der ersten Seite gegenüberliegenden zweiten Seite des Stators sind die freien Enden der Leiterabschnitte mit einem Anschluss einer Stromversorgungseinheit verbunden. Die Stromversorgungseinheit umfasst zumindest zwei Leiter, die elektrisch mit zumindest einem leistungselektronischen Bauteil verbunden sind. Das leistungselektronische Bauteil ist einem oder mehreren Leiterabschnitten zugeordnet. Das zumindest eine leistungselektronische Bauteil ist auf einem Kühlkörper angeordnet, wobei der Kühlkörper im Wesentlichen scheibenförmig ausgebildet ist und großflächig die zweite Seite des Stators überdeckt.

Nach dem vorgeschlagenen Prinzip lässt sich ein großflächiger Kühlkörper bereitstellen, welcher die zweite Seite des Stators überdeckt, d.h. an der Stirnseite des Stators angeordnet ist, und als Träger für das leistungselektronische Bauteil dient. Dadurch ist eine vereinfachte und effiziente Kühlung des mindestens einen leistungselektronischen Bauteils gewährleistet, wobei sich die Maschine mit geringem Fertigungsaufwand herstellen lässt.

Die eingangs erwähnten statorseitigen Wicklungen sind bei der vorgeschlagenen elektrischen Maschine durch eine Einzelstabwicklung ersetzt, die dahingehend vereinfacht ist, dass sie Leiterabschnitte pro Nut aufweist und somit die Leiterabschnitte beispielsweise im Wesentlichen geradlinig in axialer Richtung ausgeführt sein können. Hierbei können hohe Stromstärken bei geringer Spannung zum Einsatz kommen, um eine magnetomotorische Kraft gleicher Größenordnung wie bei konventionellen Maschinen mit verteilter Wicklung zu erzielen.

Die Integration der Leistungselektronik, welche das zumindest eine leistungselektronische Bauteil umfasst, kann durch die Anordnung auf dem scheibenförmigen und damit flächigen Kühlkörper auf einfache Weise realisiert werden, wodurch sich insbesondere ein besonders kompakter Aufbau der elektrischen Maschine ergibt.

Unter einer im Wesentlichen scheibenförmigen Ausbildung des Kühlkörpers sind nicht nur kreisförmige, sondern auch vieleckige Randkonturen zu verstehen. Die Randkontur kann somit eine Anzahl an Ecken aufweisen, so dass die Randkontur ein Viereck, ein Fünfeck, ein Sechseck, usw. aufweist. Allgemein ist die Anzahl der Ecken größer oder gleich vier.

Der Kühlkörper ist vorzugsweise aus einem nicht magnetischen Material gefertigt. Das für den Kühlkörper verwendete Material ist vorzugsweise nicht elektrisch leitfähig.

In einer Ausführungsform kontaktiert je ein leistungselektronisches Bauteil je einen (als Einzelstab ausgebildeten) Leiterabschnitt. Damit dient je ein leistungselektronisches Bauteil zur elektrischen Speisung je eines Leiterabschnitts. Es können auch mehrere leistungselektronische Bauteile vorgesehen sein, die entlang des Umfangs des Stators verteilt auf dem Kühlkörper angeordnet sind.

Der Kühlkörper kann zum Führen eines Fluids zweckmäßigerweise zumindest einen Fluidkanal umfassen. Der zumindest eine Fluidkanal ist derart in dem Kühlkörper angeordnet, dass insbesondere die von dem leistungselektronischen Bauteil erzeugte Wärme gut abgeführt werden kann.

Es ist insbesondere zweckmäßig, wenn die zumindest zwei Leiter ringförmig ausgebildet sind. Dies ermöglicht es, insbesondere beim Vorsehen einer Vielzahl von leistungselektronischen Bauteilen, diese auf einfache Weise mit jeweiligen Spannungspotentialen zu beaufschlagen.

In einer zweckmäßigen Ausgestaltung ist zumindest einer der zumindest zwei Leiter auf dem Kühlkörper angeordnet. Ist der Kühlkörper aus einem isolierenden Material gefertigt, brauchen keine gesonderten Isolationsmaßnahmen bereitgestellt werden.

Eine neue Ausgestaltung sieht vor, dass zumindest einer der zumindest zwei Leiter zusammen mit dem zumindest einen leistungselektronischen Bauteil auf einer ersten Seite des Kühlkörpers angeordnet ist. Alternativ kann zumindest einer der zumindest zwei Leiter auf einer der ersten Seite gegenüberliegenden zweiten Seite des Kühlkörpers angeordnet sein. Es sind somit Anordnungen möglich, bei denen die zumindest zwei Leiter auf der dem Stator zugewandten Seite des Kühlkörpers angeordnet sind. Eine andere Ausgestaltung ermöglicht eine Variante, bei der die zumindest zwei Leiter auf der dem Stator abgewandten Seite des Kühlkörpers angeordnet sind. Ebenso ist eine Variante möglich, bei der einer der Leiter auf der dem Stator zugewandten Seite des Kühlkörpers und der andere der beiden Leiter auf der dem Stator abgewandten Seite des Kühlkörpers angeordnet ist. Welche Variante zu bevorzugen ist, kann insbesondere von den vorherrschenden Platzverhältnissen abhängig gemacht werden.

Es ist weiterhin zweckmäßig, dass der Kühlkörper einen der zumindest zwei Leiter ausbildet. Hierdurch kann ein größerer Flächenanteil für das zumindest eine leistungselektronische Bauteil auf der Fläche des Kühlkörpers bereitgestellt werden. Es versteht sich, dass in diesem Fall der Kühlkörper elektrisch isoliert von den darauf angebrachten Komponenten realisiert sein muss.

Ein leistungselektronisches Bauteil umfasst eine ein- oder mehrlagige Leiterplatte (insbesondere in Gestalt einer Metall-Substrat-Leiterplatte) mit zumindest einem Halbleiterschalter und einer optionalen Treiberschaltung. Darüber hinaus kann das leistungselektronische Bauteil weitere elektronische Komponenten, wie zumindest einen Kondensator, umfassen. Die Treiberschaltung und die weiteren elektronischen Komponenten können auch auf einer oder mehreren anderen Leiterplatten angeordnet sein.

Bei einer anderen Variante kann vorgesehen sein, dass zumindest einer der zumindest zwei Leiter auf der Leiterplatte angeordnet ist. Beispielsweise kann dann die Leiterplatte als Isolationskörper zu dem Kühlkörper genutzt werden.

Es ist ferner zweckmäßig, wenn die zumindest eine Halbleiterschaltung und die optionale Treiberschaltung auf und/oder in der Leiterplatte angeordnet sind. Insbesondere bei einer Variante, bei der die zumindest eine Halbleiterschaltung und die optionale Treiberschaltung (und die optional weiteren) vorhandenen elektronischen Komponenten in der Leiterplatte angeordnet sind, können die Außenflächen zur Kontaktierung mit den zumindest zwei Leitern großflächig genutzt werden. Hierdurch lassen sich kleine spezifische Stromstärken pro Fläche erzielen.

Es ist weiterhin zweckmäßig, wenn der zumindest eine Halbleiterschalter und/oder die optionale Treiberschaltung als ein oberflächenmontierbares Bauelement ausgebildet sind. Hierdurch lässt sich das leistungselektronische Bauteil mit kompakten Abmaßen bereitstellen. Insbesondere sind keine diskreten leistungselektronischen Module erforderlich, welche verhältnismäßig viel Platz erfordern.

Eine weitere Ausgestaltung sieht vor, dass die Leiterplatte zumindest einen Teil des Kühlkörpers bildet. Hierzu kann die Leiterplatte mit zumindest einer einseitig offenen Kühlrille zur Ausbildung des zumindest einen Fluidkanals versehen sein, wobei die Leiterplatte auf der die zumindest eine einseitig offene Kühlrille aufweisenden Seite mit einer Konterplatte verbunden ist. Die Konterplatte kann optional einseitig offene Kühlrillen aufweisen, die korrespondierend zu den Kühlrillen der Leiterplatte angeordnet sind. Hierdurch kann die Anordnung aus Kühlkörper, Leistungselektronik und Stromverteilung kompakt realisiert werden.

Eine weitere Ausgestaltung sieht vor, dass die Leiterabschnitte durch eine zugeordnete Aussparung in dem Kühlkörper und in der Leiterplatte verlängert sind, um auf der von dem Stator abgewandten Seite des Kühlkörpers elektrisch mit dem zumindest einen leistungselektronischen Bauteil verbunden zu werden. Diese Ausgestaltung ermöglicht eine einfache elektrische Verbindung der Leistungselektronik mit dem geradlinig in axialer Richtung auf der zweiten Seite des Rotors herausgeführten Leiterabschnitten.

Alternativ können die Leiterabschnitte durch ein, insbesondere zentrales, Innenloch des Kühlkörpers und/oder außerhalb des Außenumfangs des Kühlkörpers über jeweilige Verbindungsstücke mit dem zumindest einen leistungselektronischen Bauteil verbunden sein.

Es ist weiterhin zweckmäßig, wenn der Kühlkörper eine Mehrzahl an Segmenten aufweist. Insbesondere kann dabei vorgesehen sein, dass die Anzahl der Segmente insbesondere der Anzahl der Phasen entspricht. Hierdurch lässt sich eine besonders effektive Kühlung der Leistungselektronik bereitstellen.

Eine weitere zweckmäßige Ausgestaltung sieht vor, dass ein jeweiliges leistungselektronisches Bauteil zur Ansteuerung einer oder mehrerer Phasen ausgebildet ist.

Eine der beiden, insbesondere ringförmig ausgebildeten, Leiter kann eine positive elektrische Gleichspannungsversorgung realisieren. Ein anderer der beiden, insbesondere ringförmig ausgebildeten, Leiter kann eine negative elektrische Gleichspannungsversorgung gewährleisten. Dies kann als DC-Bus verstanden werden. Ist z.B. ein dritter Leiter vorgesehen, so kann dieser ein Zwischenpotential aufweisen.

Die Halbleiterschalter eines jeweiligen leistungselektronischen Bauteils sind insbesondere zur Bildung einer Halbbrücke verschaltet. Weist das leistungselektronische Bauteil optional einen Kondensator auf, so kann dieser als Zwischenkreiskondensator oder Teil eines verteilten Zwischenkreises bzw. einer verteilten Zwischenkreiskapazität ausgebildet sein. Dabei kann eine Serien- und/oder Parallelschaltung von mehreren Kondensatoren mit dazwischenliegender Stützmatrix aus leitenden und nicht leitenden Elementen vorgesehen sein.

Die Stromversorgungseinheit kann dazu ausgebildet sein, je einen Leiterabschnitt mittels des jeweiligen leistungselektronischen Bauteils mit je einer eigenen elektrischen Phase zu versorgen.

Die vorgeschlagene Ausführung der elektrischen Maschine hat besondere Vorteile unter Gesichtspunkten der elektromagnetischen Verträglichkeit, da keine Oberwellen-behafteten Wechselstromleitungen verlegt werden müssen. Es ist zudem kein separates Umrichtergehäuse erforderlich. Es sind keine Kabel zwischen einer separaten Leistungselektronik und der eigentlichen elektrischen Maschine notwendig, da die Leistungselektronik anstelle des bei konventioneller Maschine vorhandenen Wickelkopfes platziert ist.

Die Anzahl der Phasen kann beispielsweise drei, vier, fünf oder mindestens zehn betragen.

Um einen besonders geringen Fertigungsaufwand zu erzielen, können die Leiterabschnitte gerade ausgebildet sein. Die Leiterabschnitte können beispielsweise Aluminium-Stäbe, Kupfer-Stäbe oder Bronze-Stäbe oder Legierungen hiervon sein.

Weitere Einzelheiten und Ausgestaltungen sind nachfolgend in mehreren Ausführungsbeispielen anhand der Figuren näher beschrieben. Es zeigen:
- Fig. 1: eine Draufsicht auf ein erstes Ausführungsbeispiel eines leistungselektronischen Bauteils, das auf einer als Kühlkörper ausgebildeten Kühlscheibe aufgebracht ist;
- Fig. 2: eine Querschnittsansicht entlang der Linie II-II der Anordnung aus Fig. 1;
- Fig. 3: eine Querschnittsdarstellung eines zweiten Ausführungsbeispiels, bei dem mehrere leistungselektronische Bauteile auf einem als Kühlscheibe ausgebildeten Kühlkörper angeordnet sind;
- Fig. 4: eine Querschnittsdarstellung eines dritten Ausführungsbeispiels, bei dem mehrere leistungselektronische Bauteile auf einem als Kühlscheibe ausgebildeten Kühlkörper angeordnet sind;
- Fig. 5: eine Querschnittsdarstellung eines vierten Ausführungsbeispiels, bei dem mehrere leistungselektronische Bauteile auf einem als Kühlscheibe ausgebildeten Kühlkörper angeordnet sind;
- Fig. 6: eine Querschnittsdarstellung eines fünftes Ausführungsbeispiels, bei dem mehrere leistungselektronische Bauteile auf einem als Kühlscheibe ausgebildeten Kühlkörper angeordnet sind;
- Fig. 7: eine Querschnittsdarstellung durch den linken Teil des fünften Ausführungsbeispiels, wobei eine Leiterplatte Teil des Kühlkörpers gemäß einer ersten Variante ist;
- Fig. 8: eine Querschnittsdarstellung durch den linken Teil des fünften Ausführungsbeispiels, wobei eine Leiterplatte Teil des Kühlkörpers gemäß einer zweiten Variante ist;
- Fig. 9: eine auseinandergezogene perspektivische Darstellung von Leiterabschnitten, ringförmigen Leitern und einem leistungselektronischen Modul eines sechsten Ausführungsbeispiels ohne dargestellten Kühlkörper;
- Fig. 10: eine Querschnittsdarstellung durch einen Teil des in Fig. 9 gezeigten Ausführungsbeispiels der Anordnung von Kühlkörper, ringförmigen Leitern und leistungselektronischem Modul;
- Fig. 11: eine auseinandergezogene perspektivische Darstellung, welche die planare Anordnung von leistungselektronischen Modulen und ringförmigen Leitern auf einem Kühlkörper gemäß eines siebten Ausführungsbeispiels zeigt;
- Fig. 12: eine Schnittdarstellung durch die in Fig. 11 gezeigte Anordnung;
- Fig. 13: eine perspektivische Darstellung eines achten Ausführungsbeispiels, bei dem die zwei Leiter als zwei benachbart angeordnete leistungselektronische Module verbindende Leiterabschnitte ausgebildet sind;
- Fig. 14: eine Querschnittsdarstellung eines leistungselektronischen Bauteils in Multi-Layer-Bauweise; und
- Fig. 15: eine Querschnittsdarstellung der Anordnung des in Fig. 14 gezeigten leistungselektronischen Bauteils in Relation zu einem Kühlkörper und Leitern der Stromversorgungseinheit.

In den nachfolgend beschriebenen Beispielen bezeichnen gleiche Bezugszeichen gleiche Elemente, wobei keine maßstabsgetreuen Darstellungen gezeigt sind.

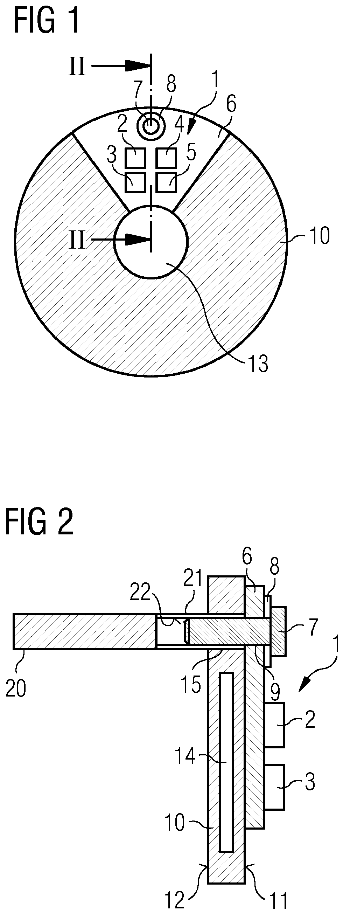

Die Zeichnungen illustrieren verschiedene Varianten der Anordnung einer Leistungselektronik und eines Kühlkörpers für eine prinzipiell bekannte elektrische Maschine, wie diese in der Beschreibungseinleitung definiert ist. Eine solche elektrische Maschine, die im Grundprinzip beispielsweise aus der DE 10 2014 113 489 A1 bekannt ist, umfasst einen Stator. Der Stator weist entlang seines Umfangs verteilte Nuten auf, welche sich in einer axialen Richtung des Stators geradlinig erstrecken. In jeder Nut ist ein Leiterabschnitt 20 (Figuren 2, 9, 10 und 12) eingebracht. Die Leiterabschnitte mindestens eines Polpaares sind auf einer ersten Seite miteinander in einem Kurzschlussring z.B. kurz geschlossen.

Jedem Leiterabschnitt 20 kann ein leistungselektronisches Bauteil 1, wie dieses nachfolgend näher beschrieben wird, zugeordnet sein, welches auf einem im Wesentlichen scheibenförmig und hier beispielhaft kreisförmig ausgebildeten Kühlkörper auf einer der ersten Seite gegenüberliegenden zweiten Seite des Stators angeordnet ist. Von dieser zweiten Seite des Stators erfolgt auch der Anschluss an eine Stromversorgungseinheit, welche beispielhaft zwei, vorzugsweise zumindest abschnittsweise ringförmige, Leiter 17, 18 umfasst, die elektrisch mit der Anzahl an leistungselektronischen Bauteilen 1 verbunden sind. Jedes leistungselektronische Bauteil 1 ist als Modul aufgebaut und umfasst zumindest eine Halbbrücke, wie später näher erläutert werden wird.

Fig. 1 zeigt eine Draufsicht auf einen scheibenförmigen Kühlkörper 10, der die zweite Seite des Stators großflächig überdeckt. Unter dem Begriff "großflächig" ist hierbei zu verstehen, dass die von dem Kühlkörper 10 eingenommene Fläche in etwa der stirnseitigen Fläche des Stators an der zweiten Seite entspricht, an der die Leiterabschnitte im Wesentlichen geradlinig in axialer Richtung aus den Nuten geführt sind (in Fig. 1 nicht dargestellt). Die Leiterstäbe durchdringen dabei ein nicht dargestelltes Lagerschild.

Der scheibenförmige Kühlkörper 10 weist beispielhaft eine zentrale Aussparung 13, die nachfolgend als Innenloch bezeichnet wird, auf. Auf der dem Stator abgewandten ersten Seite 11 des Kühlkörpers ist eine Anzahl an leistungselektronischen Modulen 1 aufgebracht. Die Anzahl der leistungselektronischen Bauteile 1, die in Modulform ausgebildet sind, kann 1 oder mehr sein, wobei die Anzahl von der Anzahl der Leiterabschnitte und der zu bildenden Phase sowie von der Topologie der Endstufe abhängt. In dem in Fig. 1 gezeigten Ausführungsbeispiel können beispielsweise über den gesamten Umfang des scheibenförmigen Kühlkörpers 10 sechs leistungselektronische Bauteile 1 benachbart nebeneinander angeordnet werden. Der Einfachheit halber ist lediglich ein leistungselektronisches Bauteil 1 dargestellt, wobei deren Aufbau grundsätzlich identisch ist.

Das elektronische Bauteil 1 umfasst einen ersten Halbleiterschalter 2, einen zweiten Halbleiterschalter 3, eine optionale Treiberschaltung und eine optionale elektronische Komponente 5, z.B. einen Kondensator. Die Halbleiterschalter sind insbesondere Leistungshalbleiter, z.B. IGBTs, MOSFETs, JFETs und dergleichen. Abhängig von der Verschaltung kann das elektronische Bauteil 1 zusätzlich nicht gezeigte Dioden umfassen. Die Halbleiterschalter 2, 3 sind beispielsweise als Halbbrücke verschaltet. Der Kondensator 5 kann beispielsweise einen Zwischenkreiskondensator der Halbbrücke darstellen.

Die Halbleiterschalter 2, 3, die optionale Treiberschaltung 4 und die elektronische Komponente 5 sind auf einer Leiterplatte 6 angeordnet, welche aus einer Trägerplatte und einer Leiterzugstruktur besteht. Die Leiterzugstruktur ist der Übersichtlichkeit halber in Fig. 1 nicht dargestellt.

Das leistungselektronische Bauteil 1 ist über seine Leiterplatte 6 mit dem Kühlkörper 10 mechanisch verbunden. Über die mechanische Befestigung, die im hier gezeigten Ausführungsbeispiel über eine Schraube 7 vorgenommen ist, erfolgt gleichzeitig eine elektronische Kontaktierung eines dem leistungselektronischen Bauteil 1 zugeordneten Leiterabschnitts 20 (siehe Fig. 2). Der Leiterabschnitt 20 ist als Einzelstab ausgebildet. Obwohl in den Fig. 1 und 2 lediglich ein einzelner Leiterabschnitt 20 dargestellt ist, kann das leistungselektronische Bauteil 1 mit einer Mehrzahl an Leiterabschnitten 20 in der nachfolgend beschriebenen Bauweise mechanisch und elektrisch verbunden werden.

Die Schraube 7 greift durch eine Ausnehmung 9 in der Leiterplatte 6 und eine in axialer Richtung konzentrisch angeordnete Aussparung 15 in dem Kühlkörper 10 in eine in der Aussparung 15 angeordnete Hülse 21 ein. Die Hülse 21 kann zur mechanischen Verbindung mit der Schraube 7 über ein Innengewinde 22 verfügen. Eine elektrische Verbindung zu dem Leiterabschnitt 20 erfolgt über die Hülse 21, wobei die Verbindung zwischen der Hülse 21 und dem Leiterabschnitt 20 durch Verschweißung, Druck, Verschraubung oder einen flexiblen Leiter und dergleichen realisiert werden kann.

In einer nicht dargestellten Abwandlung kann der Leiterabschnitt 20 auch ein Gewindeloch mit Innengewinde aufweisen, so dass die zusätzliche Hülse 21 entfallen kann. In einer weiteren nicht dargestellten Abwandlung kann der Leiterabschnitt 20 auch die durch Ausnehmung 9 und die Aussparung 15 ragen und an seinem Ende ein Außengewinde aufweisen. Auf dieses kann dann eine Mutter geschraubt werden, welche eine mechanische Verbindung zwischen Bauteil 1 und Leiterabschnitt 20 übernimmt.

Um den durch den Schraubenkopf auf die Leiterplatte 6 aufgebrachten Druck möglichst gering zu halten, kann zweckmäßigerweise eine Unterlegscheibe 8 und/oder eine Kontaktscheibe vorgesehen sein, die die von dem Schraubenkopf der Schraube 7 aufgebrachte Kraft großflächig auf der Leiterplatte 6 verteilt.

Aus der schematischen Darstellung der Fig. 2 ist ferner ersichtlich, dass der Kühlkörper 10 zumindest einen Fluidkanal 14 zum Führen eines Kühlfluids z.B. (entionisiertes) Wasser und dergleichen umfasst. Obwohl der Fluidkanal 14 in der gezeigten Darstellung in radialer Richtung verläuft, kann der Fluidkanal 14 (oder können die Fluidkanäle) auch in axialer Richtung oder mäanderförmig verlaufen. Auch Kombinationen davon sind möglich. Nicht dargestellt sind Flansche als Zu- und Abfluss für das Kühlfluid.

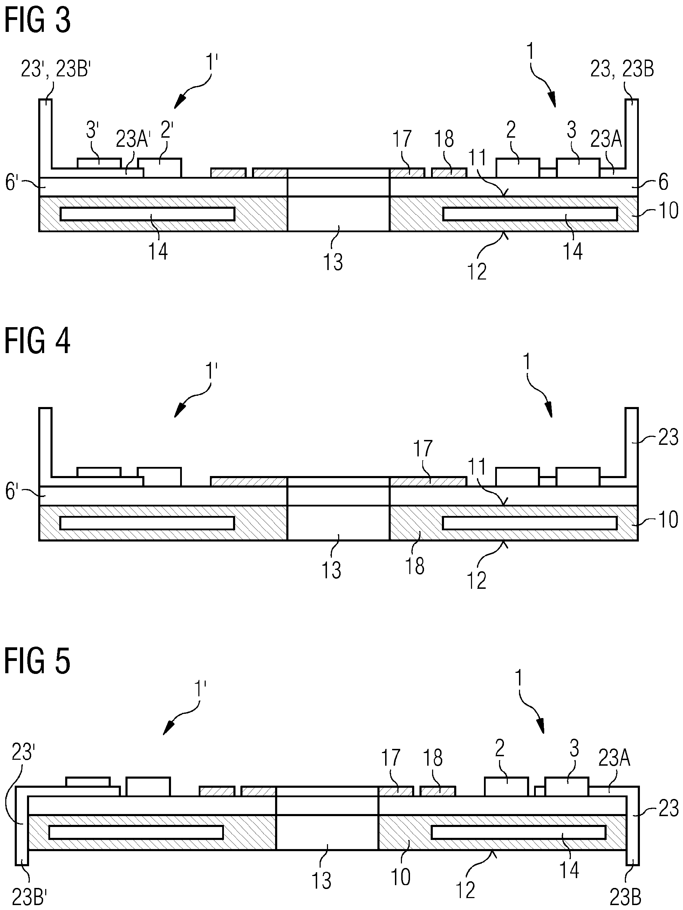

Fig. 3 zeigt ein zweites Ausführungsbeispiel in einer schematischen Querschnittsdarstellung. Dargestellt ist wiederum der Kühlkörper 10, auf dessen erster Seite 11 in der gezeigten Darstellung beidseitig des Innenlochs 13 jeweils ein leistungselektronisches Bauteil 1 und 1' aufgebracht ist. Unterhalb der jeweiligen leistungselektronischen Bauteile 1, 1' ist der Kühlkörper 10 mit jeweiligen (beispielhaft in radialer Richtung verlaufenden) Fluidkanälen 14 versehen.

Auf der von dem Kühlkörper 10 abgewandten Seite einer jeweiligen Leiterplatte 6, 6' sind beispielhaft benachbart zu dem Innenloch 13 die bereits erwähnten Leiter 17 und 18 als ringförmige und konzentrisch angeordnete Metallflächen aufgebracht. In radialer Richtung in Richtung des Außenumfangs sind jeweils die Halbleiterschalter 2, 3 bzw. 2', 3' ersichtlich. Die elektrische Kontaktierung der (nicht dargestellten) Leiterabschnitte 20 erfolgt mittels L-förmiger Verbindungsstücke 23, wobei ein mit 23A, 23A' bezeichneter Schenkel, Z.B. durch Verschraubung, einen Kontakt zu einer Leiterzugstruktur des leistungselektronischen Bauteils 1, 1' herstellt. Ein in axialer Richtung des Rotors verlaufender Schenkel 23B, 23B' (welche sich senkrecht zu den Flächen des Kühlkörpers 10 und der Leiterplatten 6, 6' der Bauteile 1, 1' erstrecken) dient zur elektrischen Kontaktierung mit den hier nicht gezeigten, zugeordneten Leiterabschnitten 20. Die Befestigung kann durch Schweißen, Schrauben oder Pressen erfolgen.

Die ringförmigen Leiter 17, 18 bilden einen DC-Bus, wobei beispielsweise der Leiter 17 eine positive elektrische Gleichspannung und der Leiter 18 eine negative elektrische Gleichspannungsversorgung realisiert.

Das in Fig. 4 gezeigte Ausgestaltungsbeispiel unterscheidet sich von dem in Fig. 3 dadurch, dass lediglich der Leiter 17 auf den Leiterplatten 6, 6' angeordnet ist. Der Kühlkörper 10 bildet den zweiten Leiter 18 aus und realisiert eine negative elektrische Gleichspannungsversorgung. In dieser Ausgestaltungsvariante ist es erforderlich, dass der Kühlkörper 18 über ein elektrisches Isolationsmaterial von den leistungselektronischen Bauteilen 1, 1' zumindest abschnittweise getrennt ist. Dies kann beispielsweise durch die Trägerplatten der Leiterplatten 6, 6' oder eine gesondert realisierte Isolationsschicht realisiert sein.

Die in den Fig. 3 und 4 gezeigten Ausführungsbeispiele haben gemeinsam, dass die erste Seite 11 des Kühlkörpers 10 mit den darauf befestigten Bauteilen 1, 1' dem Rotor zugewandt ist. Demgegenüber zeigt Fig. 5 eine leicht abgewandelte Ausgestaltungsvariante, bei der der Rotor der zweiten Seite 12 des Kühlkörpers 10 zugewandt ist. Dies bedeutet, die Komponenten der Leistungselektronik, d.h. die leistungselektronischen Bauteile 1, 1' sind vom Rotor abgewandt. Zur Herstellung einer elektrischen Verbindung zu den Leiterabschnitten 20 weisen die Abschnitte 23B, 23B' in Richtung des Stators und werden wahlweise (wie in Fig. 5 gezeigt) am Außenumfang des Kühlkörpers vorbeigeführt und/oder durch die Innenbohrung 13 hindurchgeführt. Alternativ können die Abschnitte 23B, 23B' auch durch Schlitze oder dezidierte Aussparungen (nicht gezeigt) geführt werden. Die Innenbohrung 13 könnte dann entfallen. Dies ist abhängig davon, wo die zur Gleichspannungsversorgung benötigten Leiter 17, 18 angeordnet sind. Da diese im Ausführungsbeispiel der Fig. 5 konzentrisch um das Innenloch und benachbart zu dem Innenloch 13 angeordnet sind, führen die Schenkel 23B, 23B' am Außenumfang vorbei. Dies könnte jedoch auch vertauscht sein.

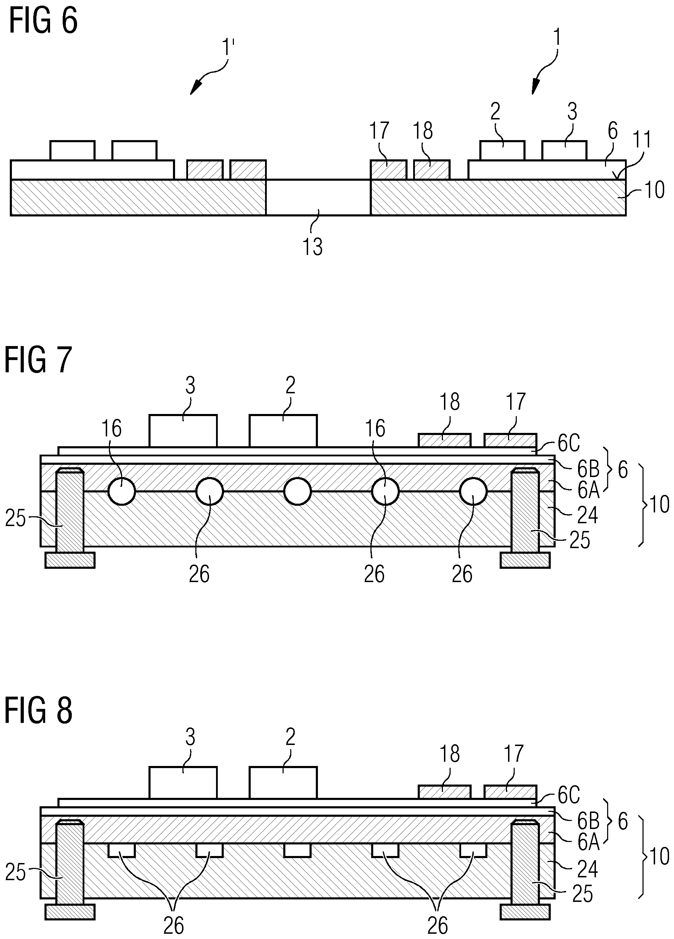

Fig. 6 zeigt ein Ausgestaltungsbeispiel, bei dem die Leiter 17, 18 nicht auf dem Träger jeweiliger leistungselektronischer Bauteile 1, 1' aufgebracht sind, sondern stattdessen direkt auf dem Kühlkörper 10. Hierzu ist entweder der Kühlkörper 10 aus einem elektrisch isolierenden Material zu fertigen oder eine Isolationsschicht zwischen den Leitern 17, 18 und im Kühlkörper 10 vorzusehen.

In einer alternativen nicht gezeigten Ausgestaltung könnten die Leiter 17, 18, voneinander isoliert, übereinander angeordnet sein. Der Leiterstapel könnte direkt auf dem Kühlkörper 10 oder der Leiterplatte 6 angeordnet sein.

Die Fig. 7 und 8 zeigen Ausführungsbeispiele, bei denen die Leiterplatte 6 Bestandteil des Kühlkörpers 10 ist. Hierzu weist im Ausführungsbeispiel gemäß Fig. 7 die bereits erwähnte Trägerplatte 6A der Leiterplatte 6, eine Anzahl an einseitig offenen Kühlrillen 16 auf. Korrespondierend hierzu weist eine Konterplatte 24, die mit der Trägerplatte 6A der Leiterplatte 6 verschraubt wird, eine entsprechende Anzahl an einseitig offenen Kühlrillen 26 auf. Hierdurch ergibt sich, lediglich beispielhaft, eine Anzahl an kreisrunden Kühlkanälen. Die Verbindung von Trägerplatte 6A und Konterplatte 25 erfolgt beispielsweise mittels einer Anzahl an Schrauben 25. Die mechanische Verbindung von Trägerplatte 6A und Konterplatte 24 kann auch auf andere Weise, z.B. Klebung, Verschweißung, Nietung, formschlüssige Elemente, usw. erfolgen.

Neben der Trägerplatte 6A umfasst die Leiterplatte 6 eine Isolationsschicht 6B und eine darauf aufgebrachte Leiterzugstruktur. Auf der Leiterzugstruktur 6C sind dann in diesem Ausführungsbeispiel die Halbleiterschalter 2, 3 sowie die zwei Leiter 17, 18 zur Gleichspannungsversorgung angeordnet. Die Trägerplatte 6A, der Isolator 6B und die Leiterzugstruktur 6C bilden zusammen die bereits erwähnte Leiterplatte 6.

In dem in Fig. 8 gezeigten Ausführungsbeispiel weist lediglich die Konterplatte 24 einseitig offene Kühlrillen 26 auf. Diese sind im Ausführungsbeispiel rechteckig ausgeführt. Ebenso könnte auch lediglich die Trägerplatte 6A einseitig offene Kühlrillen aufweisen, während die Konterplatte 24 keine Kühlrillen umfasst.

Es versteht sich, dass die Querschnittsgestalt der Kühlrillen beliebig sein kann. Ebenso kann eine beliebige Kombination unterschiedlicher Querschnitte von Kühlrillen in einer Ausgestaltungsform vorgesehen sein. Ferner können abschnittsweise nur Kühlrillen in der Trägerplatte 6A und an anderen Abschnitten nur Kühlrillen in der Konterplatte 24 vorgesehen sein.

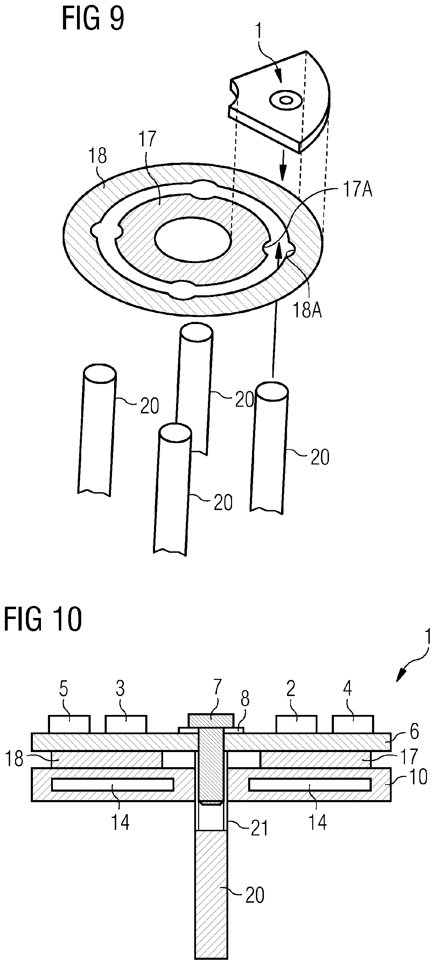

Fig. 9 zeigt eine auseinander gezogene perspektivische Darstellung ohne Kühlkörper, bei der die Leiter 17, 18 unterhalb der leistungselektronischen Bauteile 1 angeordnet sind. Dies geht am besten aus der zugehörigen Querschnittsdarstellung der Fig. 10 hervor. In der bereits beschriebenen Weise sind auf der Leiterplatte 6 des leistungselektronischen Bauteils die Halbleiterschalter 2, 3, die optionale Treiberschaltung 4 und die elektronische Komponente 5 (Kondensator) aufgebracht. Auf der gegenüberliegenden Seite der Leiterplatte sind die zwei Leiter 17, 18 angeordnet. Lediglich beispielhaft erfolgt eine Verbindung zwischen der Leiterplatte 6 des Bauteils 1 und dem Kühlkörper 10 durch eine zwischen den Leitern 17, 18 vorgesehene Schraubverbindung (nicht dargestellt).

Um die Leiter 17, 18 möglichst großflächig ausbilden zu können, können diese im Bereich der Schraubverbindung jeweilige Aussparungen 17A und 18A aufweisen (siehe Fig. 9). Die Schraubverbindung erfolgt im Übrigen wie in Verbindung mit Fig. 2 beschrieben. Die Kontaktierung des Leiterabschnitts 20 erfolgt lediglich beispielhaft über die bereits beschriebene Hülse 21, welche die Schraubverbindung ermöglicht. Die Hülse 21 stützt sich dabei von unten an der Leiterplatte 6 ab. Die Verbindung zwischen dem Leiterabschnitt 20 und der Hülse 21 kann durch Schrauben, Schweißen, Pressen, Löten oder Druck erfolgen.

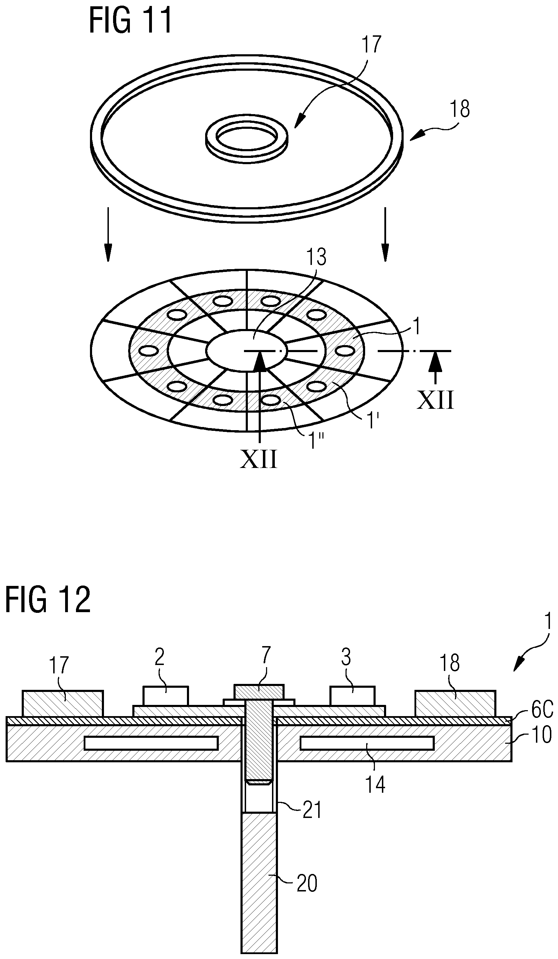

Fig. 11 zeigt ein Ausgestaltungsbeispiel, bei dem die Komponenten des leistungselektronischen Bauteils zwischen den konzentrisch angeordneten ringförmigen Leitern 17, 18 angeordnet sind, wobei die Leiter 17, 18 auf der Leiterzugstruktur 6C der Leiterplatte 6 angeordnet sind (Fig. 12). Hierdurch kommen die Leiter 17, 18 und die elektronischen Komponenten des leistungselektronischen Bauteils 1 in etwa in einer Ebene, die senkrecht zur Axialrichtung des Stators verläuft, zum Liegen. Die Verbindung zwischen dem leistungselektronischen Bauteil, d.h. seiner Leiterplatte 6 und dem Kühlkörper 10 sowie den dahinter angeordneten Leiterabschnitten 20, erfolgt wie in Verbindung mit Fig. 2 und 10 beschrieben.

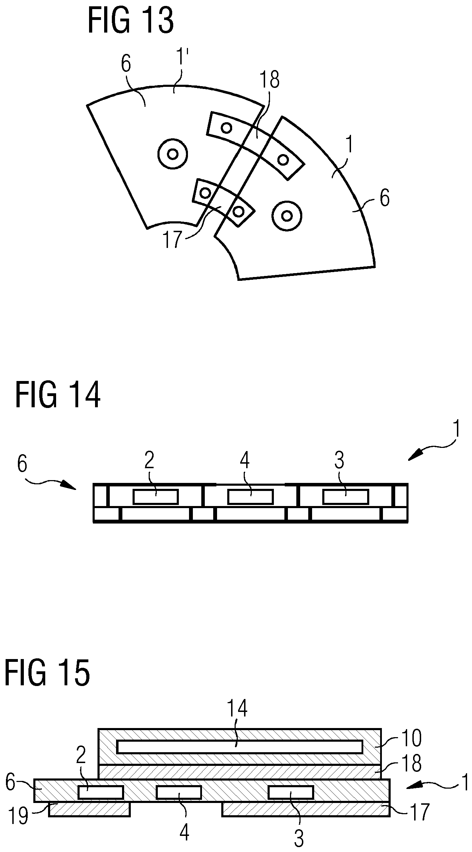

Fig. 13 zeigt ein Ausgestaltungsbeispiel, bei der die Leiter 17, 18 nicht ringförmig ausgebildet sind, sondern als Leiterzugabschnitte von einem leistungselektronischen Bauteil 1 zum benachbarten leistungselektronischen Bauteil 1' geführt sind. Hierdurch steht eine größere Fläche zum Aufbringen von elektronischen Komponenten auf den Leiterplatten 6 der Bauteile 1, 1' zur Verfügung.

Fig. 14 zeigt eine Ausgestaltungsvariante, bei der die Halbleiterschalter 2, 3 und die optionale Treiberschaltung 4 im Inneren einer mehrschichtigen Leiterplatte 6 angeordnet sind. Hierdurch ist es möglich, auf den beiden gegenüber liegenden Oberflächen die Leiter 17, 18, 23 großflächig aufzubringen.

In dem in Fig. 15 gezeigten Ausgestaltungsbeispiel sind dabei auf einer in der Blattebene unteren Seite der Leiter 17 und ein weiterer Leiter 19, z.B. ein Wechselspannungsleiter, aufgebracht. Auf der in der Blattebene oberen Seite der Leiterplatte 6 ist der Leiter 18 angeordnet. Auf dem Leiter 18 ist wiederum der bereits beschriebene Kühlkörper 10 angeordnet.

Um die Übertragung von Vibrationen von den Leiterabschnitten 20 auf das leistungselektronische 1 Bauteil zu vermeiden, kann es zweckmäßig, sein, die Leiterabschnitte 20 über flexible Drähte, Leitungen oder Leiterseile mit korrespondierenden Kontaktteilen (Schrauben, Hülsen, Verbindungsstücken) zu verbinden.

In einer weiteren, in den Figuren nicht gezeigten Ausgestaltung können die Halbleiterschalter 2, 3 und die optionale Treiberschaltung 4 beidseitig mit einem Kühlkörper versehen sein.

In einer anderen, in den Figuren nicht gezeigten Ausgestaltungsvariante kann das leistungselektronische Bauteil 1 mit den elektronischen Komponenten (Halbleiterschalter 2, 3 und die optionale Treiberschaltung 4) voran auf dem Kühlkörper 10 aufgebracht sein.

Darüber hinaus sind Kombinationen der genannten Varianten möglich.

Die Halbleiterschalter sind insbesondere Leistungshalbleiter. Dabei sind sämtliche Transistorvarianten einsetzbar, insbesondere IGBTs, MOSFETs, JFETs usw.

### Bezugszeichenliste

- 1: leistungselektronisches Bauteil
- 2: Halbleiterschalter
- 3: Halbleiterschalter
- 4: Treiberschaltung
- 5: elektronische Komponente
- 6: Leiterplatte
- 6A: Trägerplatte
- 6B: Isolator
- 6C: Leiterfläche/-zugstruktur
- 7: Schraube
- 8: Unterlegscheibe
- 9: Bohrung / Ausnehmung
- 10: Kühlkörper
- 11: erste Seite des Kühlkörpers
- 12: zweite Seite des Kühlkörpers
- 13: Aussparung/Innenloch
- 14: Fluidkanal
- 15: Ausparung
- 16: Kühlrille
- 17: Leiter (DC-Bus)
- 17A: Aussparung
- 18: Leiter (DC-Bus)
- 18A: Aussparung
- 19: Leiter (AC)
- 20: Leiterabschnitt
- 21: Hülse
- 22: Innengewinde
- 23: Verbindungsstück (L-Förmig)
- 24: Konterplatte
- 25: Schraube
- 26: Kühlrille

## Patentansprüche

1. Elektrische Maschine mit einem Stator, wobei
- der Stator eine Vielzahl von Nuten zur Aufnahme einer Statorwicklung umfasst;
- je ein Leiterabschnitt der Statorwicklung je Nut eingelegt ist;
- die Leiterabschnitte mindestens eines Polpaars auf einer ersten Seite des Stators miteinander kurzgeschlossen sind;
- die Leiterabschnitte auf einer der ersten Seite gegenüberliegenden zweiten Seite des Stators jeweils mit einem Anschluss einer Stromversorgungseinheit verbunden sind;
- die Stromversorgungseinheit zumindest zwei Leiter (17, 18) umfasst, die elektrisch mit zumindest einem leistungselektronischen Bauteil (1) verbunden sind;
- das zumindest eine leistungselektronische Bauteil (1) auf einem Kühlkörper (10) angeordnet ist;
**dadurch gekennzeichnet, dass**
- der Kühlkörper (10) im Wesentlichen scheibenförmig ausgebildet ist und großflächig die zweite Seite des Stators überdeckt.

2. Elektrische Maschine nach Anspruch 1, **dadurch gekennzeichnet, dass** der Kühlkörper (10) zum Führen eines Fluids zumindest einen Fluidkanal (14) umfasst.

3. Elektrische Maschine nach Anspruch 1 oder 2, **dadurch gekennzeichnet, dass** die zumindest zwei Leiter (17, 18) zumindest abschnittsweise ringförmig ausgebildet sind.

4. Elektrische Maschine nach einem der Ansprüche 1 bis 3, **dadurch gekennzeichnet, dass** zumindest einer der zumindest zwei Leiter (17, 18) auf dem Kühlkörper (10) angeordnet ist.

5. Elektrische Maschine nach einem der Ansprüche 1 bis 4, **dadurch gekennzeichnet, dass** zumindest einer der zumindest zwei Leiter (17, 18) zusammen mit dem zumindest einen leistungselektronischen Bauteil (1) auf einer ersten Seite (11) des Kühlkörpers (10) angeordnet ist.

6. Elektrische Maschine nach einem der Ansprüche 1 bis 4, **dadurch gekennzeichnet, dass** zumindest einer der zumindest zwei Leiter (17, 18) auf einer der ersten Seite (11) gegenüberliegenden zweiten Seite (12) des Kühlkörpers (10) angeordnet ist.

7. Elektrische Maschine nach einem der vorhergehenden Ansprüche, **dadurch gekennzeichnet, dass** der Kühlkörper (10) einen der zumindest zwei Leiter (17, 18) ausbildet.

8. Elektrische Maschine nach einem der vorhergehenden Ansprüche, **dadurch gekennzeichnet, dass** das leistungselektronische Bauteil (1) eine ein- oder mehrlagige Leiterplatte (6) mit zumindest einem Halbleiterschalter (2, 3) und einer optionalen Treiberschaltung (4) umfasst.

9. Elektrische Maschine nach Anspruch 8, **dadurch gekennzeichnet, dass** zumindest einer der zumindest zwei Leiter (17, 18) auf der Leiterplatte (6) angeordnet ist.

10. Elektrische Maschine nach Anspruch 8 oder 9, **dadurch gekennzeichnet, dass** der zumindest eine Halbleiterschalter (2, 3) und die optionale Treiberschaltung (5) auf und/oder in der Leiterplatte (6) angeordnet sind.

11. Elektrische Maschine nach einem der Ansprüche 8 bis 10, **dadurch gekennzeichnet, dass** der zumindest eine Halbleiterschalter (2, 3) und/oder die Treiberschaltung (5) als ein oberflächenmontierbares Bauelement ausgebildet ist.

12. Elektrische Maschine nach einem der Ansprüche 8 bis 11, **dadurch gekennzeichnet, dass** die Leiterplatte (6) zumindest einen Teil des Kühlkörpers (10) bildet.

13. Elektrische Maschine nach Anspruch 12, **dadurch gekennzeichnet, dass** die Leiterplatte (6) mit zumindest einer einseitig offenen Kühlrille (16) versehen ist, wobei die Leiterplatte (6) auf der die zumindest einseitig offenen Kühlrille (16) aufweisenden Seite mit einer Konterplatte (24) verbunden ist.

14. Elektrische Maschine nach einem der Ansprüche 8 bis 13, **dadurch gekennzeichnet, dass** die Leiterabschnitte (20) durch eine zugordnete Aussparung (15) in dem Kühlkörper (10) und in der Leiterplatte (6) verlängert sind, um auf der von dem Stator abgewandten Seite des Kühlkörpers (10) elektrisch mit dem zumindest einen leistungselektronischen Bauteil (1) verbunden zu werden.

15. Elektrische Maschine nach einem der Ansprüche 1 bis 13, **dadurch gekennzeichnet, dass** die Leiterabschnitte (20) durch ein, insbesondere zentrales, Innenloch (13) des Kühlkörpers (10) und/oder außerhalb des Außenumfangs des Kühlkörpers (10) über jeweilige Verbindungsstücke mit dem zumindest einen leistungselektronischen Bauteil (1) verbunden sind.

16. Elektrische Maschine nach einem der Ansprüche 1 bis 14, **dadurch gekennzeichnet, dass** der Kühlköper (10) eine Mehrzahl an Segmenten aufweist, wobei die Anzahl der Segmente insbesondere der Anzahl der Phasen entspricht.

17. Elektrische Maschine nach einem der Ansprüche 1 bis 16, **dadurch gekennzeichnet, dass** ein jeweiliges leistungselektronisches Bauteil (1) zur Ansteuerung einer oder mehrerer Phasen ausgebildet ist.
